Europäisches Patentamt

European Patent Office

Office européen des brevets

(19)

(11) Veröffentlichungsnummer: **0 492 330 A1**

# (12) EUROPÄISCHE PATENTANMELDUNG

(21) Anmeldenummer: **91121492.2**

(22) Anmeldetag: **14.12.91**

(51) Int. Cl.⁵: **G01C 9/06**, G01C 9/20

(30) Priorität: **24.12.90 DE 4041842**

(43) Veröffentlichungstag der Anmeldung:
**01.07.92 Patentblatt  92/27**

(84) Benannte Vertragsstaaten:
**BE DE FR GB IT NL**

(71) Anmelder: **TELEFUNKEN SYSTEMTECHNIK
GMBH
Sedanstrasse 10
W-7900 Ulm (Donau)(DE)**

(72) Erfinder: **Scherf, Lutz, Dipl.-Ing.
Schulstrasse 63
W-2200 Kl. Nordende(DE)**
Erfinder: **Köhler, Rainer, Dipl.-Ing.
Käthe-Kollwitz-Allee 22
W-2082 Tornesch(DE)**

Erfinder: **Grave, Han-Heinrich, Dipl.-Ing.
Reepschlägerstrasse 2
W-2000 Wedel(DE)**
Erfinder: **Schulze, Jürgen, Dipl.-Ing.
Friedrich-Ebert-Allee 14
W-2000 Wedel(DE)**
Erfinder: **Pauer, Jens, Dipl.-Ing.
Sapperweg 32
W-2000 Hamburg 55(DE)**
Erfinder: **Ulitzka, Manfred, Dipl.-Ing.
Im Neugrabener Dorf 28 a
W-2104 Hamburg 92(DE)**

(74) Vertreter: **Salhoff, Roland, Dipl.-Ing.
TELEFUNKEN SYSTEMTECHNIK GMBH
Postfach 17 30
W-7900 Ulm (Donau)(DE)**

(54) **Kapazitiver Neigungssensor.**

(57) Kapazitiver Neigungssensor, vorzugsweise für Kraftfahrzeug-Diebstahlwarnanlagen, bei dem kapazitive Änderungen durch Lageveränderungen des Neigungssensors hervorgerufen und sensiert werden und der eine gravitationsabhängige Winkelmessung mit hoher Auflösung ermöglicht. Zwischen den metallischen Belägen des Neigungssensors ist entweder eine elektrisch leitfähige Flüssigkeit oder als Dielektrikum eine Flüssigkeit (12,22) mit hoher Dielektrizitätskonstante in einem zylinderförmigen Behälter (11, 21) eingeschlossen. Die Kapazitätswerte zweier Kondensatoren werden meßtechnisch ermittelt, wobei die Differenz der Kapazitätswerte beider Kondensatoren als ein Maß für den Neigungswinkel des Neigungssensors gegenüber seiner Ruhestellung herangezogen wird.

Fig. 3

Die Erfindung betrifft einen kapazitiven Neigungssensor, vorzugsweise für Kraftfahrzeug-Diebstahlwarnanlagen, bei dem kapazitive Änderungen durch Lageveränderungen des Neigungssensors hervorgerufen und sensiert werden.

Aus der EP 0 196 735 A2 ist ein Differenzkapazitätsdetektor mit zwei Kondensatoren, deren Kapazitätswerte unterschiedlich veränderbar sind, vorbekannt. Zur Bestimmung der Differenz dieser Kapazitätswerte sind den Kondensatoren jeweils ein Pulsgenerator nachgeschaltet, an deren Ausgängen Impulssignale erzeugt werden, deren Pulsbreite ein Maß für die Kapazität des zugeordneten Kondensators darstellt. Die Impulse stehen an jeweils einem Eingang eines Komparators an, der einen Ausgangsimpuls bereitstellt, dessen Breite gleich der Pulsbreitendifferenz der von den Pulsgeneratoren gelieferten Impulssignale ist. Die Breite des vom Komparator erzeugten Impulssignales stellt somit ein Maß für die Kapazitätsdifferenz zwischen den beiden Kondensatoren dar.

Der Erfindung liegt die Aufgabe zugrunde, einen Neigungssensor der eingangs genannten Art zur Erzeugung eines winkelabhängigen Ausgangssignales im Zusammenhang mit einer elektronischen Auswertungseinrichtung, vorzugsweise ein durch die veränderliche Pulsbreite eines Impulssignales repräsentiertes winkelabhängiges Ausgangssignal, zu schaffen, der eine gravitationsabhängige Winkelmessung mit hoher Auflösung, insbesondere zur Sensierung von Lageveränderungen an stehenden Fahrzeugen; ermöglicht.

Die Aufgabe wird erfindungsgemäß dadurch gelöst, daß ein mit einer elektrisch leitfähigen Flüssigkeit gefüllter und aus Isoliermaterial bestehender zylinderförmiger Behälter mit einer seiner Stirnflächen auf einer Isolierplatte befestigt ist, daß die Isolierplatte im Bereich der Stirnfläche des Behälters zwei gegeneinander und gegen die Umgebung isolierte spiegelsymmetrisch angeordnete plattenförmige Metallbeläge aufweist, daß die elektrisch leitfähige Flüssigkeit mittels eines Anschlußkontaktes derart kontaktiert ist, daß die elektrisch leitfähige Flüssigkeit mit Anschlußkontakt, die isolierte Stirnseite des Behälters und gegebenenfalls die Isolierplatte sowie die plattenförmigen Metallbeläge jeweils einen von zwei Kondensatoren bilden, deren Kapazitätswerte meßtechnisch ermittelt werden, und daß die Differenz der Kapazitätswerte beider Kondensatoren als ein Maß für den Neigungswinkel des Neigungssensors gegenüber seiner Ruhestellung herangezogen wird.

Die Aufgabe wird erfindungsgemäß auch dadurch gelöst, daß zwischen den metallischen Belägen des Neigungssensors als Dielektrikum eine Flüssigkeit mit hoher Dielektrizitätskonstante in einem zylinderförmigen Behälter eingeschlossen ist, der eine hohe Dichtigkeit für das Dielektrikum und einen hohen Isolationswiderstand für elektrische Ströme aufweist.

Ein Vorteil der Erfindung besteht darin, daß sich die Flüssigkeit in separaten, gasdichten und isolierten Behältern, vorzugsweise aus Glas, befindet, so daß die Leckströme des kapazitiven Neigungssensors klein gegenüber seinen Ladeströmen sind. Vorteilhafterweise kann der Neigungssensor, dessen Flüssigkeit eine geringe Viskosität über einen hohen Temperaturbereich aufweist, in einem Temperaturbereich von - 40 ° C bis + 90 ° C eingesetzt werden.

Ausgestaltungen der Erfindung sind in den Unteransprüchen 2 bis 4 und 6 bis 17 beschrieben.

In der Zeichnung ist ein Ausführungsbeispiel nach der Erfindung dargestellt, und zwar zeigt:

Fig. 1    eine Zusammenstellung der Bauelemente eines Neigungssensors mit einem mit einer elektrisch leitfähigen Flüssigkeit gefüllten Behälter,

Fig. 2    einen durch zwei zusätzliche Kondensatoren ergänzten Neigungssensor gemäß Fig. 1,

Fig. 3    eine Zusammenstellung der Bauelemente eines Neigungssensors mit einem mit einer dielektrischen Flüssigkeit gefüllten Behälter,

Fig. 4    den Neigungssensor gemäß Fig. 3 im Schnitt und

Fig. 5    eine Zusammenstellung der Bauelemente eines Neigungssensors, der gegenüber demjenigen aus Fig. 3 und Fig. 4 abgewandelt ist.

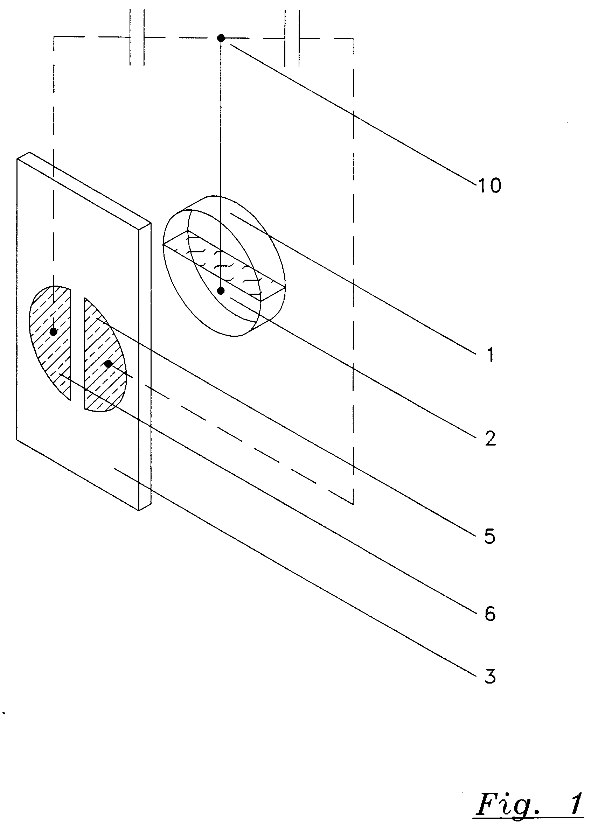

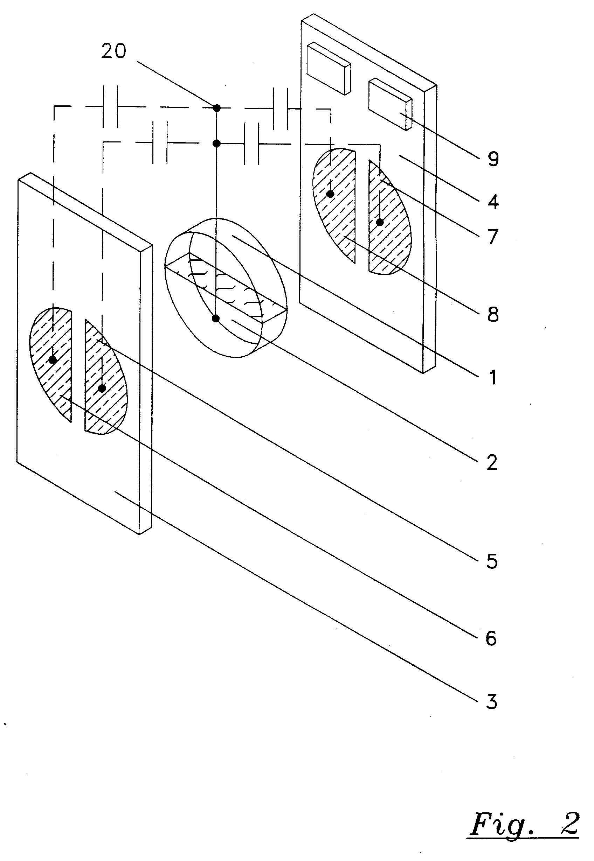

In Fig. 1 ist ein aus Isoliermaterial bestehender zylinderförmiger Behälter 1 mit einer elektrisch leitfähigen Flüssigkeit 2 gefüllt, wobei der Behälter als zylinderförmige Glasküvette aus einem Stück ausgebildet sein kann. Die Glasküvette weist zur Einfüllung der Flüssigkeit 2, vorzugsweise Isobutylmethylketon, einen Stutzen auf, der nach Einfüllung der Flüssigkeit 2 abgebrochen und dessen Einfüllöffnung dann zugeschweißt wird. Hierdurch wird die Gasdichtigkeit unabhängig von der Umgebungstemperatur gewährleistet. Der Abstand zwischen den Stirnflächen des Behälters 1 ist derart bemessen, daß an den Stirnflächen eine Kapillarwirkung der Flüssigkeit 2 vermieden wird. Andernseits sollen seine beiden Stirnflächen einen möglichst geringen Abstand voneinander aufweisen, da die erreichbare Kapazität der (unten beschriebenen) Plattenkondensatoren zu diesem Abstand umgekehrt proportional ist. Beispielsweise kann als ein guter Kompromiß der beiden entgegengesetzten Anforderungen ein Abstand von etwa 2 mm bei Verwendung der obenbezeichneten Flüssigkeit gewählt werden. Die Füllmenge der Flüssigkeit 2 in dem Behälter 1 kann vorzugsweise so gewählt werden, daß der Flüssigkeitsspiegel bei horizontal ausgerichteter Rotationsachse bis zum Mittelpunkt der kreisförmigen Zylinderflächen des Behälters 1 reicht. Die Behälter der Ausführungsbeispiele nach den Fig. 2 bis 5 können die gleichen Merkmale aufweisen.

Der Behälter 1 des Neigungssensors aus Fig. 1 ist mit einer seiner beiden Stirnflächen auf einer Isolierplatte 3 befestigt, die im Bereich der Stirnfläche des Behälters 1 zwei gegeneinander und gegen die Umgebung isolierte spiegelsymmterisch angeordnete plattenförmige Metallbeläge 5 und 6 aufweist. Die vorzugsweise auf der dem Behälter 1 zugewandten Innenseite der Isolierplatte 3 angeordneten Metallbeläge 5 und 6 können als Kreisabschnitte ausgebildet sein, wobei ihre Spiegelachse vorteilhafterweise in der Ruhestellung des Neigungssensors vertikal ausgerichtet ist.

Die elektrisch leitfähige Flüssigkeit 2 ist mittels eines Anschlußkontaktes 10, der beispielsweise durch eine zeichnerisch nicht dargestellte metallische, ganz- oder teilflächige Rückwand des Behälters gebildet werden kann, derart kontaktiert, daß die Flüssigkeit 2 als eine Kondensatorplatte von zwei Kondensaotren anzusehen ist. Diese beiden Kondensatoren werden somit durch die Flüssigkeit 2 mit Anschlußkontakt 10, durch die isolierte Stirnseite des Behälters 1 und für den Fall, daß die Metallbeläge 5 und 6 auf der dem Behälter 1 abgewandten Außenseite der Isolierplatte 3 angeordnet sind, durch die Isolierplatte 3 sowie durch jeweils einen der beiden Metallbeläge 5 oder 6 gebildet. Die Kondensatoren sind in Fig. 1 in gestrichelter Form eingezeichnet. Die Kapazitätswerte beider Kondensatoren werden meßtechnisch ermittelt, wobei Differenzwerte, die sich aufgrund von Neigungen des Neigungssensors um die Zylinderachse des Behälters und damit durch unterschiedlich mit Flüssigkeit bedeckte Flächenanteile der Metallbeläge 5 und 6 ergeben, als ein Maß für den Neigungswinkel des Neigungssensors gegenüber seiner Ruhestellung herangezogen werden. Die Ruhestellung ist zweckmäßigerweise durch den Differenzwert Null bestimmt, der sich bei vertikal ausgerichteter Spiegelachse der Metallbeläge 5 und 6 ergibt. Zur Verdoppelung der vermessenen Kapazitätswerte ist es möglich, daß die Isolierplatte 3 zusätzlich auf ihrer Rückseite einen dem ersten Behälter 1 entsprechenden zweiten Behälter aufweist, dessen Mittelachse mit der Mittelachse des ersten Behälters fluchtet.

Gegenüber dem Neigungssensor gemäß Fig. 1 weist der in Fig. 2 dargestellte Neigungssensor eine zweite Isolierplatte 4 auf, die an der anderen Stirnfläche des Behälters 1 befestigt wird. Auch diese Isolierplatte weist im Bereich der Stirnfläche des Behälters 1 zwei Metallbeläge 7 und 8 auf, die bezüglich ihrer Ausbildung und Anordnung den Metallbelägen 5 und 6 der ersten Isolierplatte 3 entsprechen und diesen Metallbelägen direkt gegenüber liegen. Die elektrisch leitfähige Flüssigkeit 2 mit Anschlußkontakt 20, die isolierte zweite Stirnseite des Behälters 1 und gegebenfalls die zweite Isolierplatte 4 sowie die dieser Isolierplatte 4 zugeordneten plattenförmigen Metallbeläge 7 und 8 bilden jeweils einen von zwei weiteren Kondensatoren. Der Neigungssensor aus Fig. 2 weist somit insgesamt vier Kondensatoren auf, die in gestrichelter Form dargestellt sind. Bei exakter Anordnung aller plattenförmigen Beläge 5, 6, 7 und 8 zueinander weisen die einander gegenüberliegenden Kondensatoren jeweils gleiche Kapazitätswerte auf, die zu einem in seiner Größe verdoppelten Differenzsignal gegenüber dem Differenzsignal des Neigungssensors aus Fig. 1 führen.

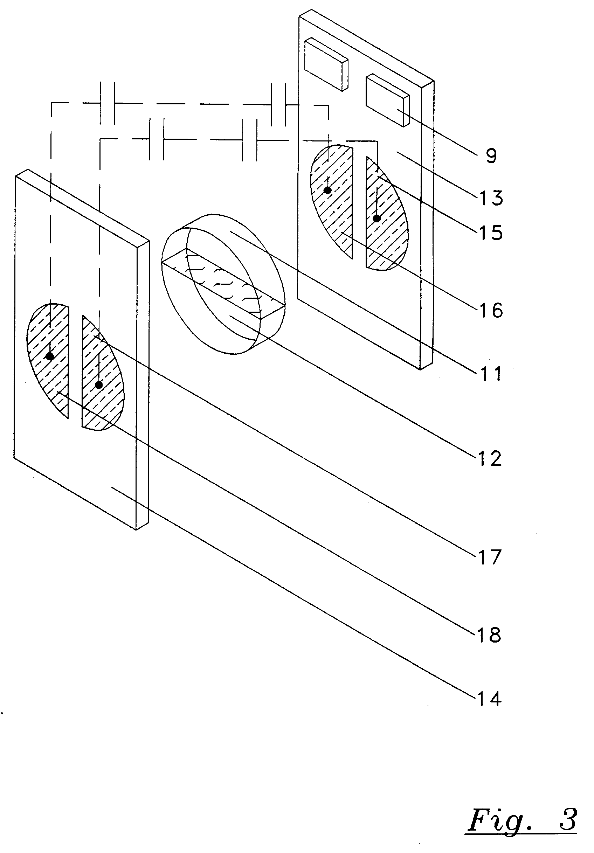

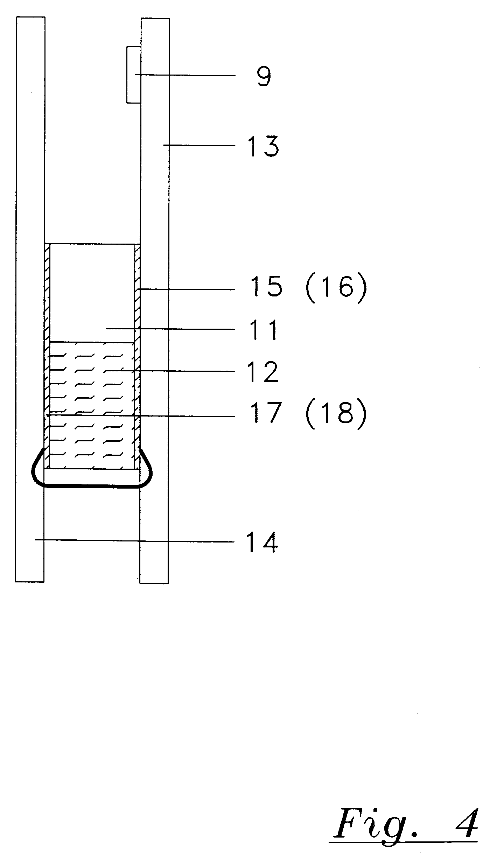

In den Fig. 3 und 4 ist ein, eine Flüssigkeit 12 mit hoher relativer Dielektrizitätskonstanten, vorzugsweise Isobutylmethylketon, enthaltender zylinderförmiger Behälter 11 mit seinen Stirnflächen zwischen zwei Isolierplatten 13 und 14 angeordnet. Die Isolierplatten 13 und 14 bestehen vorzugsweise - ebenso wie die Isolierplatten 3 und 4 der in den Fig. 1 und 2 dargestellten Neigungssensoren - aus Kunststoff, sind beispielsweise rechteckförmig ausgebildet und erstrecken sich über den Bereich des Behälters 11 hinaus. Außerhalb des Behälterbereichs können die Isolierplatten 13 und 14 als Träger von elektrischen und/oder elektronischen Bauelementen 9 und/oder von Leiterplatten dienen. Gedacht ist beispielsweise an eine Befestigung von Bauelementen zur Stromversorgung der nachfolgend beschriebenen Plattenkondensatoren bzw. der Auswerteeinrichtung zur Erzeugung eines winkelabhängigen Ausgangssignales, insbesondere eines Anzeige- und/oder Alarmsignales.

Im Bereich der Stirnflächen des Behälters 11 weist jede Isolierplatte 13 und 14 jeweils gegeneinander und gegen die Umgebung isolierte, spiegelsymmetrisch angeordnete Metallbeläge auf und zwar die Isolierplatte 13 die Metallbeläge 15 und 16 sowie die Isolierplatte 14 die Metallbeläge 17 und 18. Die Metallbeläge 15, 16, 17 und 18, die vorzugsweise auf dem zylinderförmigen Behälter 11 zugewandten Innenseiten der Isolierplatten 13 und 14 liegen, können als Kreisabschnitte ausgebildet sein. Ihre Spiegelachsen sind vorteilhafterweise in der Ruhestellung des Neigungssensors vertikal ausgerichtet.

Die einander in Achsrichtung des Behälters 11 gegenüberliegenden Metallbeläge 15 und 17 bzw. 16 und 18 bilden zusammen mit der im Behälter 11 angeordneten Flüssigkeit 12 jeweils einen von zwei Plattenkondensatoren, deren von der Drehlage des Neigungssensors abhängigen Kapazitätswerte meßtechnisch ermittelt und beispielsweise jeweils einem Eingang eines Differenzgliedes zugeführt werden. Das vom Differenzglied bereitgestellte Differenzsignal wird als Maß für den Neigungswinkel des Neigungssensors gegenüber seiner Ruhestellung herangezogen. Hierzu kann es z. B. am Eingang eines Schwellwertgliedes anstehen, das bei Überschreiten eines vorgegebenen Schwellwertes durch das Differenzsignal ein Anzeige- und/oder Alarmsignal an seinem Ausgang erzeugt. Alternativ kann eine Auswertung der meßtechnisch ermittelten Kapazitätswerte der beiden Plattenkondensatoren auch mittels des eingangs beschriebenen vorbekannten Differenzkapazitätsdetektors erfolgen.

Wie insbesondere aus Fig. 4 zu ersehen ist, sind bei Ruhestellung des Neigungssensors, d. h. bei vertikal ausgerichteter Symmetrieachse der Metallbeläge 15 bis 18, alle vier Metallbeläge gleichmäßig von der Flüssigkeit 12 überdeckt. Dieses bedeutet, daß der durch die Metallbeläge 15 und 17 gebildete Plattenkondensator dieselbe Kapazität aufweist wie der durch die Metallbeläge 16 und 18 gebildete Plattenkondensator. Das Differenzsignal ist zwangsläufig Null. Wenn jedoch der Neigungssensor um die Rotationsachse des Behälters 11 gedreht wird, bleibt zwar die Oberfläche der Flüssigkeit 12 im Behälter 11 aufgrund der Schwerkraft unverändert, jedoch werden die Metallbeläge 15 und 17 des ersten Plattenkondensators und die Metallbeläge 16 und 18 des zweiten Plattenkondensators mit verschiedenen Flächenanteilen von der Flüssigkeit 12 überdeckt. Da die Flüssigkeit 12 eine höhere Dielektrizitätskonstante aufweist als die obere mit Luft oder Dampf gefüllte Hälfte des Behälters 11 haben die beiden Plattenkondensatoren unterschiedliche Kapazitätswerte, die - wie oben beschrieben - zur Bildung eines Differenzsignales und eines Anzeige- und/oder Alarmsignals herangezogen werden.

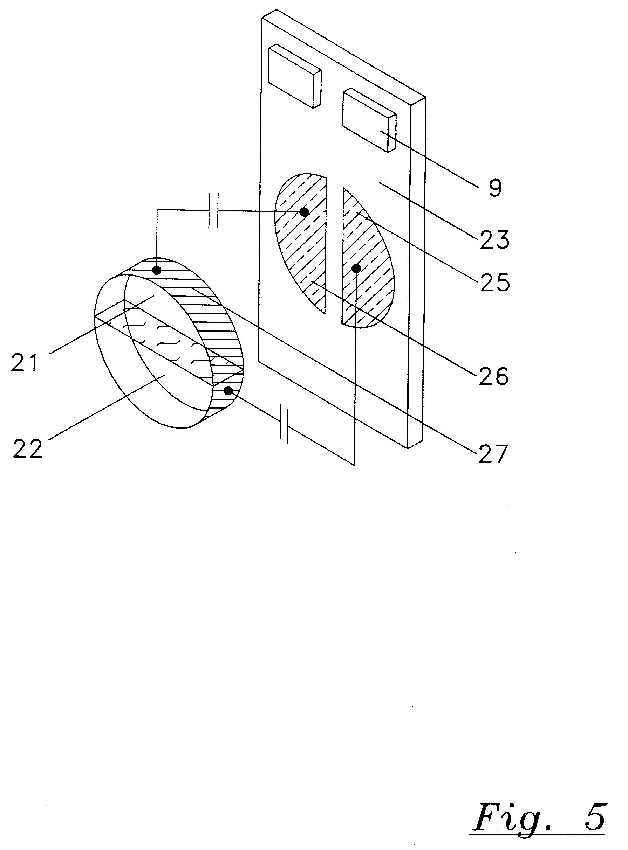

Dieses Prinzip findet auch Anwendung bei den in den Fig. 1, 2 und 5 dargestellten Neigungssensoren. Die Bauteile des in Fig. 5 dargestellten Neigungssensors entsprechen im wesentlichen den Bauelementen des Neigungssensors aus den Fig. 3 und 4, sie sind jedoch mit anderen Bezugszeichen versehen.

In Fig. 5 besitzt der Neigungssensor lediglich eine Isolierplatte 23, die im Bereich des mit einer Flüssigkeit 22 gefüllten Behälters 21 zwei gegeneinander und gegen die Umgebung isolierte spiegelsymmetrisch angeordnete plattenförmige Beläge 25, 26 aufweist. Zur Bildung von zwei Kondensatoren ist auf der Zylinderumfangsfläche des Behälters 21 ein gegen die Umgebung isolierter ringförmiger metallischer Belag 27 derart angeordnet, daß dieser metallische Belag den plattenförmigen Metallbelägen 25 bzw. 26 der Isolierplatte 23 sowie der Flüssigkeit 22 des Behälters 21 einen von zwei Kondensatoren bildet. Beide Kondensatoren sind in Fig. 5 in gestrichelter Form eingezeichnet. Der ringförmige metallische Belag 27 kann durch eine den Anschlußkontakt bildende metallische Rückwand des Behälters 21 ersetzt werden, die ganzflächig oder teilflächig ausgebildet sein kann. Die Kapazitätswerte dieser Kondensatoren werden bei verschiedenen Drehlagen des Neigungssensors ebenfalls in bekannter Weise meßtechnisch ermittelt und in oben beschriebener Weise ausgewertet.

Die Kapazitäten aller beschriebener Kondensatoren können beispielsweise in der Größenordnung von 100 pF bis 500 pF liegen.

Die Erfindung bezieht sich nicht ausschließlich auf die in den einzelnen Figuren dargestellten Ausführungsbeispiele, sondern beispielsweise auch auf technisch sinnvolle und ausführbare Kombinationen dor gezeichneten und beanspruchten Neigungssensoren.

**Patentansprüche**

1. Kapazitiver Neigungssensor, vorzugsweise für Kraftfahrzeug-Diebstahlwarnanlagen, bei dem kapazitive Änderungen durch Lageveränderungen des Neigungssensors hervorgerufen und sensiert werden, dadurch gekennzeichnet, daß ein mit einer elektrisch leitfähigen Flüssigkeit (2) gefüllter und aus Isoliermaterial bestehender zylinderförmiger Behälter (1) mit einer seiner Stirnflächen auf einer Isolierplatte (3) befestigt ist, daß die Isolierplatte (3) im Bereich der Stirnfläche des Behälters (1) zwei gegeneinander und gegen die Umgebung isolierte spiegelsymmetrisch angeordnete plattenförmige Metallbeläge (5, 6) aufweist, daß die elektrisch leitfähige Flüssigkeit (2) mittels eines Anschlußkontaktes (10) derart kontaktiert ist, daß die elektrisch leitfähige Flüssigkeit (2) mit Anschlußkontakt (10), die isolierte Stirnseite des Behälters (1) und gegebenenfalls die Isolierplatte (3) sowie die plattenförmigen Metallbeläge (5, 6) jeweils einen von zwei Kondensatoren bilden, deren Kapazitätswerte meßtechnisch ermittelt werden, und daß die Differenz der Kapazitätswerte beider Kondensatoren als ein Maß für den Neigungswinkel des Neigungssensors gegenüber seiner Ruhestellung herangezogen wird.

2. Neigungssensor nach Anspruch 1, dadurch gekennzeichnet, daß eine zweite mit der anderen Stirnfläche des Behälters (1) in mechanisch fester Verbindung stehender Isolierplatte (4) vorgesehen ist, daß die zweite Isolierplatte (4) im Bereich der Stirnfläche des Behälters (1) zwei gegeneinander und gegen die Umgebung isolierte spiegelsymmetrisch angeordnete plattenförmige Metallbeläge (7, 8) aufweist, die den plattenförmigen Metallbelägen (5, 6) der ersten Isolierplatte (3) direkt gegenüber liegen, und daß die elektrisch leitfähige Flüssigkeit (2) mit Anschlußkontakt (20), die isolierte Stirnseite des Behälters (1) und gegebenenfalls die zweite Isolierplatte (4) sowie die dieser Isolierplatte (4) zugeordneten plattenförmigen Metallbeläge (7, 8) jeweils einen von zwei weiteren Kondensatoren bilden.

3. Neigungssensor nach Anspruch 1 oder 2, dadurch gekennzeichnet, daß die Isolierplatte (3) zusätzlich auf ihrer Rückseite einen dem ersten Behälter (1) entsprechenden zweiten Behälter aufweist, dessen Mittelachse mit der Mittelachse des ersten Behälters (1) fluchtet.

4. Neigungssensor nach Anspruch 1, 2 oder 3, dadurch gekennzeichnet, daß der Anschlußkontakt (10) durch eine metallische Rückwand des Behälters (1) gebildet wird.

5. Kapazitiver Neigungssensor, vorzugsweise für Kraftfahrzeug-Diebstahlwarnanlagen, bei dem kapazitive Änderungen durch Lageveränderungen des Neigungssensors hervorgerufen und sensiert werden, dadurch gekennzeichnet, daß zwischen den metallischen Belägen des Neigungssensors als Dielektrikum eine Flüssigkeit (12, 22) mit hoher Dielektrizitätskonstante in einem zylinderförmigen Behälter (11, 21) eingeschlossen ist, der eine hohe Dichtigkeit für das Dielektrikum und einen hohen Isolationswiderstand für elektrische Ströme aufweist.

6. Neigungssensor nach Anspruch 5, dadurch gekennzeichnet, daß der aus Isoliermaterial bestehende zylinderförmige Behälter (11) mit seinen Stirnflächen zwischen zwei Isolierplatten (13, 14) angeordnet ist, daß die Isolierplatten (13, 14) im Bereich der Stirnflächen des Behälters (11) jeweils zwei gegeneinander und gegen die Umgebung isolierte spiegelsymmetrisch angeordnete plattenförmige Metallbeläge (15, 16, 17, 18) aufweisen, daß die einander in Achsrichtung des Behälters (11) gegenüberliegenden Metallbeläge (15 und 17 bzw. 16 und 18) der beiden Isolierplatten (13, 14) zusammen mit der Flüssigkeit (12) jeweils einen von zwei Plattenkondensatoren bilden, deren Kapazitätswerte meßtechnisch ermittelt werden, und daß die Differenz der Kapazitätswerte beider Plattenkondensatoren als ein Maß für den Neigungswinkel des Neigungssensors gegenüber seiner Ruhestellung herangezogen wird.

7. Neigungssensor nach Anspruch 1, 2 oder 6, dadurch gekennzeichnet, daß die plattenförmigen Metallbeläge (5, 6, 15, 16, 17, 18) auf den dem zylinderförmigen Behälter (1, 11) abgewandten Außenseiten der Isolierplatten (3, 4, 13, 14) angeordnet sind.

8. Neigungssensor nach Anspruch 1, 2 oder 6, dadurch gekennzeichnet, daß die plattenförmigen Metallbeläge (5, 6, 15, 16, 17, 18) auf den dem zylinderförmigen Behälter (1, 11) zugewandten Innenseiten der Isolierplatten (3, 4, 13, 14) angeordnet sind.

9. Neigungssensor nach Anspruch 5, dadurch gekennzeichnet, daß der aus Isoliermaterial bestehende zylinderförmige Behälter (21) mit einer seiner Stirnflächen auf einer Isolierplatte (23) befestigt ist, daß die Isolierplatte (23) im Bereich der Stirnfläche des Behälters (21) zwei gegeneinander und gegen die Umgebung isolierte spiegelsymmetrisch angeordnete plattenförmige Metallbeläge (25, 26) aufweist, daß auf der Zylinderumfangsfläche des Behälters (21) ein gegen die Umgebung isolierter ringförmiger metallischer Belag (27) derart angeordnet ist, daß dieser metallische Belag (27) mit den Metallbelägen (25 bzw. 26) der Isolierplatte (23) sowie der Flüssigkeit (22) des Behälters (21) einen von zwei Kondensatoren bildet, deren Kapazitätswerte meßtechnisch ermittelt werden, und daß die Differenz der Kapazitätswerte beider Kondensatoren als ein Maß für den Neigungswinkel des Neigungssensors gegenüber seiner Ruhestellung herangezogen wird.

10. Neigungssensor nach Anspruch 1, 2, 5, 6, 7, 8 oder 9 dadurch gekennzeichnet, daß die plattenförmigen Metallbeläge (5, 6, 7, 8, 15, 16, 17, 18, 25, 26) der Isolierplatten (3, 4, 13, 14, 23) als Kreisabschnitte ausgebildet sind.

11. Neigungssensor nach Anspruch 1, 2, 3, 5, 6, 7, 8, 9 oder 10, dadurch gekennzeichnet, daß die Spiegelachse der spiegelsymmetrisch angeordneten Metallbeläge (5, 6, 7, 8, 15, 16, 17, 18, 25, 26) der Isolierplatten (3, 4, 13, 14, 23) in der Ruhestellung der Neigungssensoren vertikal ausgerichtet sind.

12. Neigungssensor nach einem der Ansprüche 1, 2, 3, 4, 5, 6, 7, 8 oder 9, gekennzeichnet durch als zylinderförmige Glasküvetten ausgebildete Behälter (1, 11, 21), die aus einem Stück hergestellt sind und Stutzen zur Einfüllung der Flüssigkeit (2, 12, 22) aufweisen, wobei die Stutzen nach Einfüllung der Flüssigkeit abgebrochen und die Einfüllöffnungen zugeschweißt werden.

13. Neigungssensor nach Anspruch 1, 2, 3, 4, 5, 6, 7, 8, 9 oder 12, dadurch gekennzeichnet, daß der Abstand zwischen den Stirnflächen der Behälter (1, 11, 21) derart bemessen ist, daß an den Stirnflächen eine Kapillarwirkung der Flüssigkeiten (2, 12, 22) vermieden wird.

14. Neigungssensor nach Anspruch 1, 2, 3, 4, 5, 6 , 7, 8, 9, 12 oder 13, dadurch gekennzeichnet, daß die Füllmenge der Flüssigkeiten (2, 12, 22) in den Behältern (1, 11, 21) so gewählt ist, daß der Flüssigkeitsspiegel bei horizontal ausgerichteten Rotationsachsen der Behälter (1, 11, 21) bis zu ihren Mittelpunkten der kreisförmigen Zylinderflächen reicht.

15. Neigungssensor nach einem der Ansprüche 1 bis 9 oder 12 bis 14, gekennzeichnet durch die Verwendung von Isobutylmethylketon als Dielektrikum.

16. Neigungssensor nach Anspruch 1, 2, 3, 4, 6, 7, 8, 9, 10 oder 11, dadurch gekennzeichnet, daß die Isolierplatten (3, 4, 13, 14, 23) sich über den Bereich der Behälter (1, 11, 21) hinaus erstecken, und daß die Isolierplatten (3, 4, 13, 14, 23) außerhalb der Bereiche der Behälter (1, 11, 21) als Träger von elektrischen und/oder elektronischen Bauelementen und/oder Leiterplatten (9) dienen.

17. Neigungssensor nach einem der Ansprüche 1 bis 16, dadurch gekennzeichnet, daß die meßtechnisch ermittelten Kapazitätswerte der Kondensatoren jeweils einem Eingang eines Differenzgliedes zugeführt werden, daß das ein Maß für den Neigungswinkel des Neigungssensors gegenüber seiner Ruhestellung darstellende Differenzsignal am Eingang eines Schwellwertgliedes ansteht, und daß das Schwellwertglied bei Überschreiten eines vorgegebenen Schwellwertes durch das Differenzsignal ein Anzeige- und/oder Alarmsignal an seinem Ausgang erzeugt.

*Fig. 1*

20

9

4

7

8

1

2

5

6

3

*Fig. 2*

9 ⎯

13 ⎯

15 ⎯

16 ⎯

11 ⎯

12 ⎯

17 ⎯

18 ⎯

14 ⎯

*Fig. 3*

*Fig. 4*

*Fig. 5*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-3 744 411 (VEB MESSGERAETEWERK "ERICH WEINERT" MAGDEBURG) <br> * das ganze Dokument * <br> --- | 1,4,8, 10,11,14 | G01C9/06 <br> G01C9/20 |
| X <br> A | EP-A-0 035 340 (PA MANAGEMENT CONSULTANTS LTD) <br> * Seite 10, Zeile 1 - Seite 11, Zeile 2 * <br> * Seite 15, Zeile 1 - Zeile 8; Abbildungen * <br> --- | 5,10,14 <br> 11,12,16 | |
| X <br> A | DE-A-3 912 444 (REIME) <br> * Spalte 4, Zeile 31 - Zeile 52; Abbildung 4 * <br><br> --- | 5 <br> 6,7,10, 11,14 | |
| A | WO-A-9 011 489 (ZIRCON INTERNATIONAL) <br><br> * Seite 6, Zeile 4 - Seite 7, Zeile 13; Anspruch 25; Abbildungen 2,3 * <br> --- | 1,4,8, 10,11,17 | |
| A | WO-A-8 704 515 (DURACELL INTERNATIONAL INC.) <br><br> * Zusammenfassung; Abbildung 1 * <br> --- | 1,10,11, 14 | |
| A | EP-A-0 221 016 (ENGLER) <br> * Spalte 2, Zeile 6 - Zeile 51; Abbildungen * <br> --- | 1,10,14 | RECHERCHIERTE SACHGEBIETE (Int. Cl.5 ) <br><br> G01C |
| A | DE-A-3 333 049 (KLETEK CONTROLLSYSTEME) <br> * Seite 6, Zeile 32 - Zeile 35; Abbildungen 1,2 * <br> --- | 9 | |
| A | US-A-1 826 731 (CHATHAM) <br> * Seite 1, Zeile 36 - Zeile 41; Abbildung 3 * <br><br> ----- | 12 | |

Der vorliegende Recherchenbericht wurde für alle Patentansprüche erstellt

| Recherchenort | Abschlußdatum der Recherche | Prüfer |
|---|---|---|
| DEN HAAG | 24 FEBRUAR 1992 | HOEKSTRA F.R. |